Europäisches Patentamt

European Patent Office

Office européen des brevets

(19)

(11) Numéro de publication: **0 230 799**
**B1**

## (12) FASCICULE DE BREVET EUROPEEN

(45) Date de publication du fascicule du brevet:
03.10.90

(51) Int. Cl.⁵: **A01G 31/00**

(21) Numéro de dépôt: **86402614.1**

(22) Date de dépôt: **25.11.86**

(54) **Support de culture hors-sol comportant des particules superabsorbantes et procédé de fabrication.**

(30) Priorité: **29.11.85 FR 8517741**

(43) Date de publication de la demande:
**05.08.87 Bulletin 87/32**

(45) Mention de la délivrance du brevet:
**03.10.90 Bulletin 90/40**

(84) Etats contractants désignés:
**AT BE CH DE ES FR GB GR IT LI LU NL SE**

(56) Documents cités:
**EP-A- 0 077 510**
**WO-A-84/02827**
**FR-A- 2 368 883**
**US-A- 3 900 378**
**US-A- 4 318 248**

(73) Titulaire: **BEGHIN-SAY SOCIETE ANONYME,**
**F-59239 Thumeries(FR)**

(72) Inventeur: **Baron, Gérard, Immeuble Le Provence Bd M.**
**Pagnol, F-06400 St.-Laurent-du-Var(FR)**
Inventeur: **Vuillemin, Jacques, 129 Domaine de l'Etoile,**
**F-06610 La Gaude(FR)**

(74) Mandataire: **Quéré, Jean Pierre, BEGHIN-SAY Service**
**Propriété Industrielle 54, Avenue Hoche,**
**F-75008 Paris(FR)**

## Description

L'invention concerne un support de culture utilisable dans le domaine de la culture hors-sol.

La culture hors-sol présente de nombreux avantages qui expliquent son développement actuel.

Aussi de nombreux dispositifs ont déjà été proposés pour mettre en oeuvre ce type de culture.

Le document FR 2 416 643 décrit une enveloppe fermée en forme de bande contenant le substrat de culture, l'enveloppe étant constituée d'un matériau susceptible d'être traversé par les racines. Lors de l'utilisation, une longueur déterminée de la bande est entourée en spirale autour d'un plant.

Le document GB 978 588 concerne une enveloppe fermée notamment de forme tubulaire, par exemple en polyéthylène, contenant le substrat de culture. Cette enveloppe est pourvue d'ouvertures par lesquelles sont insérés les plants à cultiver.

Une autre forme de dispositif, différente de celle qui vient d'être décrite dans les documents précités, consiste dans la réalisation de tapis stratifiés.

Ainsi, le document FR 2 400 833 décrit un tapis destiné à la croissance de végétaux sur le sol formé d'une feuille de base, notamment en papier de soie rugueux ou taillé, afin d'accroître sa liaison avec les couches suivantes, recouverte de semences fixées par un adhésif approprié, elles-mêmes recouvertes par une couche de tourbe comprimée et séchée, de manière à constituer un lit de semences mélangées avec les particules de tourbe comprimées. On termine ensuite le tapis par le dépôt d'une nouvelle couche d'adhésif suivi par celui d'un voile fibreux d'une étoffe non tissée. Le voile dans ce cas assure une fonction de protection des semences.

Le document WO 85/01418 décrit un tapis constitué de deux matelas formés de fibres courtes, non orientées, lignocellulosiques, les deux matelas superposés étant liés par un adhésif. Entre ces deux matelas, pris en sandwich, sont présents divers additifs, et éventuellement des semences.

Le WO 84/02827 décrit une enveloppe pour la culture de plantes constituée d'un sac en matière plastique contenant un matériau absorbant l'eau, par exemple de la mousse phénolique granulaire (p. 1, l. 5–8). Des ouvertures sont ménagées dans la partie supérieure de l'enveloppe pour pouvoir y placer les plantes (p. 1, l. 15–17). Les particules absorbantes décrites dans ce document sont capables d'absorber plusieurs fois leurs poids d'eau mais, en gonflant, elles n'occupent qu'un volume sensiblement égal à un volume initial.

Par ailleurs, on connaît des particules appelées "superabsorbants" car absorbant plusieurs dizaines de fois leur poids en liquide aqueux et pouvant gonfler jusqu'à occuper un volume d'environ 60 à 100 fois leur volume initial. On pourra en trouver un inventaire non exhaustif dans la demande de brevet français 2 543 001. Ces particules sont notamment utilisées dans les articles d'hygiène pour enfants ou adultes, afin d'assurer une meilleure rétention des liquides corporels. Ces superabsorbants ont été également proposés pour la culture domestique et même industrielle car ils présentent l'avantage de stocker l'eau, éventuellement additionnée de divers éléments favorisant la croissance des végétaux.

L'EP-A 77 510 décrit un matériau absorbant composé d'un superabsorbant incorporé de façon permanente sur ou dans un support fibreux. Le superabsorbant est par exemple un polymère à base de polyacrylamide et le support une feuille de fibres cellulosiques ou bien un non tissé synthétique. L'EP-A 77 510 décrit également un mode d'obtention du matériau absorbant par traitement du support par le superabsorbant partiellement ramolli par de l'eau suivi d'un séchage, ce traitement étant effectué dans le cas d'un support à base de fibres cellulosiques préférentiellement par mise en suspension du support et du superabsorbant dans un solvant organique pouvant contenir jusqu'à 60% d'eau, élimination du solvant en excès et séchage, de préférence à température élevée. Du fait du mode d'obtention du matériau absorbant de l'EP-A 77 510 les particules de superabsorbant peuvent adhérer entre elles, ce qui dans le cas d'un dépôt du superabsorbant sur le support peut conduire à la formation d'un film sur le support, ou bien sont incorporées dans le support, et perdent de ce fait leur individualité. Le matériau absorbant de l'EP-A 77 510 peut être utilisé comme composant de couches pour bébés, de serviettes et tampons périodiques; il peut être aussi employé en agriculture pour la libération contrôlée d'eau aux plantes.

Les documents cités et discutés ci-dessus, d'une part, ne décrivent pas de dispositifs comportant des particules de superabsorbants individualisées, mais de plus ne décrivent ni ne suggèrent les moyens permettant d'incorporer de telles particules de manière à les utiliser le plus efficacement possible.

L'invention a plus particulièrement pour objet de proposer un support à usage professionnel ou domestique comportant des particules de superabsorbant. Les avantages de ce dispositif sont multiples:

— très faible encombrement du produit, d'où une économie importante des frais de transport du lieu de conditionnement au lieu d'utilisation;

— possibilité, du fait du faible poids du substrat sec, d'utiliser comme enveloppe un film de faible épaisseur, donc plus économique;

— sécurité très nettement améliorée par rapport au type de culture en gouttière, en cas de panne du réseau d'arrosage goutte à goutte, grâce à l'effet tampon apporté par les superabsorbants.

— croissance rapide et régulière du plant qui est le résultat d'une constante disponibilité en solution nutritive. Les éléments nutritifs sont restitués de façon continue par les superabsorbants. Cette croissance rapide assure 10 à 30 % de précocité par rapport aux méthodes modernes actuellement employées.

— très grande facilité et rapidité d'installation au sol ;

— mobilité du dispositif qui peut être enlevé après culture (cas d'un retour au plein sol ou bien passage à une culture de densité différente) ;

— aération efficace et stable des racines grâce aux propriétés des superabsorbants préconisés.

Selon l'invention, le support de culture constitué d'une enveloppe en matériau étanche caractérisé en ce qu'à l'intérieur de l'enveloppe a été répartie et fixée de façon régulière une couche de particules superabsorbantes, espacées les unes des autres, susceptibles d'absorber plusieurs dizaines de fois leur poids en liquide aqueux et, quand elles sont humidifiées de gonfler pour occuper un volume environ 60 à 100 fois supérieur à leur volume initial.

L'enveloppe étanche est constituée d'un matériau intraversable par les racines comme le polyéthylène et peut être constituée de deux feuilles soudées à leurs bords. Cette enveloppe peut se présenter sous la forme d'une longue bande longitudinale ou au contraire sous la forme d'un élément unitaire de faible dimension ou module.

Selon les conditions climatiques cette enveloppe pourra être noire ou au contraire réfléchir la lumière. Dans tous les cas, elle sera opaque à la lumière.

Comme cela a déjà été indiqué ci-avant, les particules superabsorbantes sont bien connues de l'homme de métier et l'invention n'est en aucune façon limitée à un type particulier de particules. En général, on pourra utiliser les particules telles que celles décrites dans la demande de brevet français N° 2 543 001 de la Société déposante. Parmi celles-ci il est, toutefois, avantageux d'utiliser des particules à base de polyacrylamide, de préférence en mélange avec 1 à 20 % en poids de polyacrylamide cationique en poudre fine, afin d'améliorer la capillarité entre les particules de polyacrylamide anionique. Le substrat, afin d'assurer un développement optimal des plantes, doit présenter une rétention d'air correcte, de préférence supérieure à 10 % du volume du substrat.

Nous avons pu mettre en évidence, comme le montre le tableau ci-joint, une relation étroite entre la porosité à l'air des hydrogels de polyacrylamide et les deux caractéristiques suivantes :

- 1) le taux de réticulation du polymère
- 2) la granulométrie des particules de polymère

| | Rétention d'air | |
|---|---|---|
| Granulométrie en mm | $1 < G < 3$ | $0,5 < G < 1$ |
| Polyacrylamide * I | 21 % | 1 % |
| Polyacrylamide * II | 10 % | 0 % |

Polyacrylamide I = copolymère fortement réticulé
Polyacrylamide II = copolymère faiblement réticulé

En conséquence, le substrat préférentiellement préconisé sera constitué d'un copolymère réticulé polyacrylamide - acide polyacrylique et se présentant sous forme de granulés de 0,5 à 4 mm de diamètre ou sous forme de fibres de 0,01 à 0,2 mm de diamètre et 5 à 20 mm de longueur.

Bien que la masse surfacique de la couche de superabsorbants ne soit pas critique, il est nécessaire de répartir les particules de manière régulière et de façon que les particules soient espacées les unes des autres, afin que ces dernières puissent conserver leur individualité propre et gonfler sans gêne. Il est avantageux de déposer les particules à raison de 100 g à 800 g/m². Il est également possible d'ajouter aux particules superabsorbantes des particules ou fibres destinées à améliorer la capillarité entre lesdites particules. On peut citer par exemple les particules minérales telles que : argile, bentonite, zéolite ou des fibres naturelles telles que fibres ligneuses ou cellulosiques ou des fibres synthétiques telles que les fibres textiles, la laine de roche, etc...

Le rôle de la couche consiste en plus à faciliter l'humectation du polymère par une meilleure diffusion de l'eau d'irrigation provenant d'un dispositif d'arrosage ponctuel du type goutte à goutte.

L'invention a également pour objet un procédé de fabrication du complexe formé de particules de superabsorbant et de deux feuilles à base de fibres naturelles ou synthétiques, destiné à être incorporé dans une enveloppe en matériau étanche pour former un support de culture hors-sol. Ce procédé est caractérisé en ce qu'il consiste à humidifier partiellement des particules de superabsorbant constituées de granules de diamètre compris entre 0,2 et 5 mm et/ou de fibres de diamètre compris entre 0,02 et 2 mm et de longueur comprise entre 5 et 20 mm, de manière à leur donner un pouvoir adhésif, à déposer et répartir régulièrement ces particules sur l'une des feuilles puis à placer l'autre feuille sur la couche de particules en exerçant une force de compression sur les feuilles.

L'invention a également pour objet l'utilisation du support de culture, caractérisée en ce qu'on pratique une ou plusieurs ouvertures dans une des faces de l'enveloppe, on y insère une ou plusieurs mottes de culture munies d'un plant et l'on y ajoute la solution nutritive, nécessaire à la croissance des plants.

Lors de l'humectation du sac ou de la bande déroulable, le polymère se gonfle et occupe un volume 60 à 100 fois supérieur au volume initial.

Il est également possible de prémarquer sur les supports les endroits ou les ouvertures doivent être pratiquées, et même de faire une ligne de prédécoupe. Il est possible aussi, d'assurer par des trous, le drainage de l'excédent de solution nutritive.

D'autres caractéristiques et avantages de l'invention seront mieux compris à la lecture de la description qui va suivre de deux modes de réalisation, et en se référant aux dessins annexés sur lesquels :

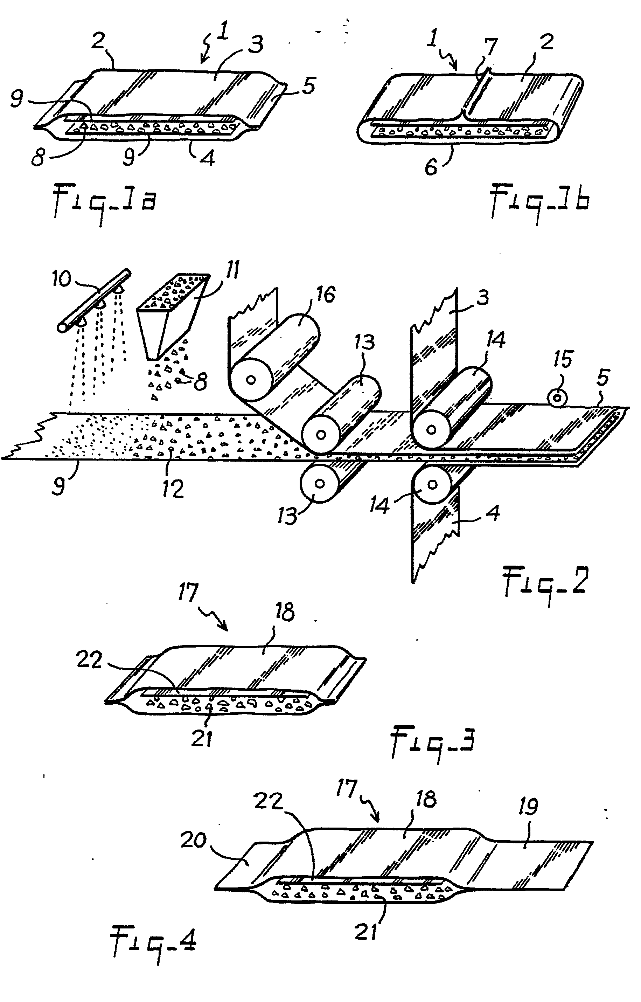

. La figure 1 est une vue en coupe transversale de deux supports de culture (figures 1A et 1B) selon une première variante de l'invention.

. La figure 2 est une représentation schématique d'un dispositif permettant de fabriquer le support selon la figure 1A.

. La figure 2A est une représentation schématique d'un dispositif permettant de fabriquer le complexe superabsorbant - feuille de maintien différent de celui de la figure 2.

. La figure 3 est une vue en coupe transversale d'un support de culture selon une seconde variante de l'invention.

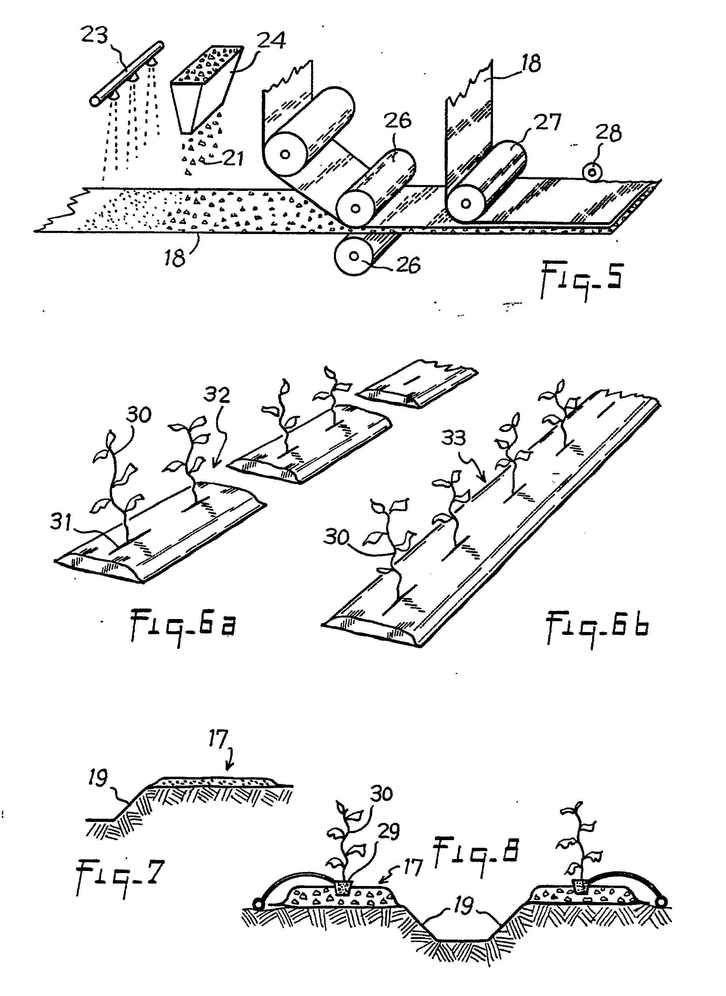

. La figure 4 est une vue en coupe transversale d'un support de culture selon la seconde variante de l'invention, muni d'un film de paillage.

. La figure 5 est une représentation d'un dispositif permettant de fabriquer le support selon la figure 3.

. La figure 6 est une vue en perspective de supports munis de plants, la figure 6A étant une vue de supports sous forme de modules individuels et la figure 6B étant une vue d'un support sous forme d'une bande continue.

. La figure 7 est une vue en coupe transversale d'un support avec film de paillage posé sur le sol.

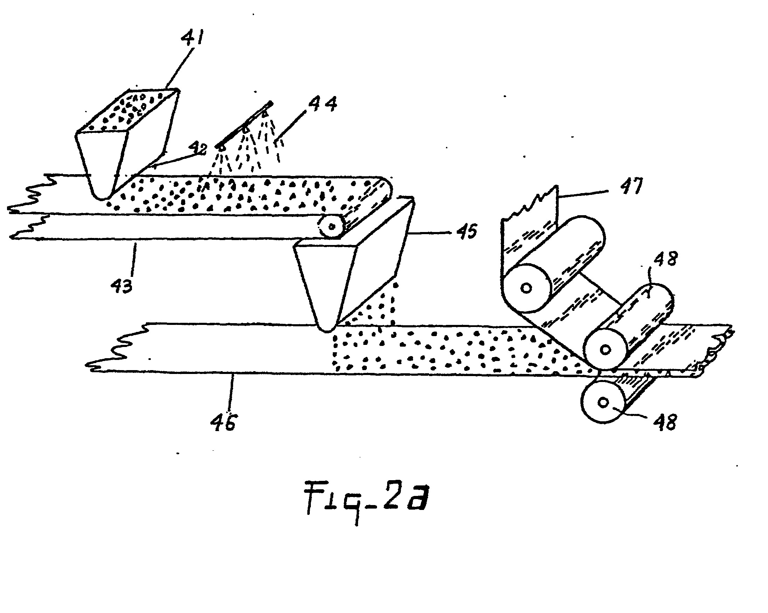

. La figure 8 est une vue en coupe transversale de deux supports avec film de paillage posés sur le sol et munis de plants ayant été arrosés.

Selon la figure 1, le support de culture 1 est constitué d'une enveloppe 2 souple en polyéthylène. Selon un premier mode de réalisation (figure 1A) l'enveloppe 2 est formée de deux feuilles 3 et 4 soudées le long de leurs bords longitudinaux 5 et transversaux (non figurés) et selon un second mode de réalisation (figure 1B) l'enveloppe 2 est formée par repliement d'une feuille en polyéthylène 6 et soudage des bords longitudinaux 7, la feuille en polyéthylène 6 ayant une largeur qui est le double de celles utilisées pour l'enveloppe de la figure 1A.

A l'intérieur de ces enveloppes 2 sont présentes des particules 8 de superabsorbants réparties uniformément. Ces particules sont prises en sandwich entre deux feuilles de maintien 9 en ouate de cellulose et on les fixe en utilisant les propriétés adhésives des particules de superabsorbant humectées en surface qui peuvent être obtenues par humidification préalable d'une des feuilles de ouate de cellulose. Cette structure sandwich peut éventuellement être calandrée afin d'améliorer la fixation.

En remplacement des feuilles de ouate de cellulose il est possible d'utiliser des feuilles en matériau synthétique tel que la mousse de polyuréthane, des structures fibreuses naturelles ou synthétiques ou analogue. Dans ce cas, la fixation des particules est assurée de préférence par pulvérisation d'un adhésif bien connu sur une des feuilles avant dépôt des particules, ou bien par thermocollage.

Selon la figure 2 représentant un premier mode de fabrication, une bande continue 9 de ouate de cellulose défile sur un support en translation (non figuré). D'amont en aval, cette feuille 9 est humidifiée par un pulvérisateur 10 puis une trémie 11 permet de déposer une couche 12 de particules 8 superabsorbantes. La feuille passe ensuite entre deux rouleaux comprimeurs et éventuellement calandreurs 13 dont l'un amène, avec l'aide d'un rouleau libre 16 intermédiaire, par dessus la couche 12, une seconde feuille de ouate de cellulose. La structure sandwich ainsi constituée peut passer ensuite entre deux rouleaux 14 situés respectivement au dessus et au dessous de ladite structure qui amènent chacun une feuille de polyéthylène 3 et 4. Enfin, des galets chauffants 15 situés au niveau des bords longitudinaux 5 soudent ceux-ci. Au lieu de former l'enveloppe directement après la fabrication du complexe, il est possible de réaliser le support de culture en deux étapes. On fabrique d'abord le complexe, puis on achève son enveloppage ultérieurement, à la demande.

Sur la figure 2A, on a illustré un autre procédé de fabrication du complexe formé des particules de polymère superabsorbant appliquées à la surface d'un film de ouate de cellulose ou prises en sandwich entre 2 feuilles de ouate de cellulose. Selon ce procédé, on utilise plus efficacement les propriétés intrinsèques de liant du polymère préconisé lorsqu'il se trouve en début de phase d'humidification partielle. D'amont en aval, le polymère superabsorbant est dosé par un doseur 41 qui distribue les particules 42 en couche uniforme sur un tapis roulant 43. Les particules de polymère sont humidifiées par un pulvérisateur 44 situé au-dessus du tapis roulant. Un répartiteur 45 dépose alors les particules de polymère hydraté à la surface d'un film de ouate de cellulose 46. Un deuxième film 47 est alors appliqué à la surface du complexe polymère - ouate de cellulose et l'ensemble est calandré entre 2 rouleaux presseurs 48 à revêtement caoutchouté.

Il est possible d'envelopper le complexe ainsi réalisé immédiatement en aval des rouleaux 48 ou bien d'effectuer cette opération ultérieurement.

Préférentiellement, l'humectation réalisée par le pulvérisateur 44 correspondra à un volume d'eau compris entre 15 et 60 % du polymère sec. Afin d'optimiser les propriétés adhésives du polymère, le délai entre humidification et épandage du polymère sur son support sera préférentiellement compris entre 5 et 60 secondes.

Les avantages de ce dispositif de fabrication, comparativement aux procédés de la figure 2 qui consiste à humidifier le support et non le polymère sont multiples :

- le collage est amélioré et uniforme sur les 2 côtés du sandwich polymère - ouate de cellulose.
- la vitesse de fabrication peut être facilement accélérée, le délai d'humectation du polymère étant indépendant de la vitesse de défilement du papier.
- le support cellulosique n'étant pas humidifié directement, il est possible d'utiliser des films de faible grammage (de l'ordre de 20 g/m²) contrairement aux procédés classiques qui utilisent fréquemment des supports de 40 à 80 g/cm².

Selon la figure 3, le support 17 est formé comme le support de la figure 1A de deux feuilles superposées en polyéthylène 18 soudées le long de leurs bords. Dans le cas de la figure 4, l'une des feuilles est beaucoup plus large que l'autre ce qui permet de dégager d'un côté une partie 19 servant de film de paillage et de l'autre côté une bande 20 beaucoup plus étroite que la partie 19.

A l'intérieur de ces enveloppes, est présente une couche 21 de particules superabsorbantes directement posées sur la feuille inférieure et fixées à celle-ci au moyen d'un adhésif. Cette couche est recouverte d'une feuille 22 en ouate de cellulose, par exemple, permettant une meilleure répartition du liquide.

Selon la figure 5, la feuille de polyéthylène 18 défile sur un support en translation (non figuré). D'amont en aval, elle est recouverte d'un adhésif au moyen d'un pulvérisateur 23, puis on dépose les particules superabsorbantes 21 à l'aide d'une trémie 24. Une feuille de ouate de cellulose 22 est amenée par l'intermédiaire d'un rouleau libre 25 et de deux rouleaux comprimeurs 26 sur la couche 21 (de la même manière que pour la figure 2). Puis, une feuille 18 est déposée sur la feuille 22 par un rouleau 27. De la même façon que pour le procédé décrit à la figure 2, les bords sont soudés au moyen de galets chauffants 28.

Pour utiliser les supports décrits précédemment, ceux-ci sont posés sur un sol plat éventuellement bordé d'un canal de drainage, comme illustré à la figure 7, la bande 19 recouvrant ledit canal. Une motte de culture 29 munie d'un plant 30 est insérée dans les fentes 31 pratiquées à cet effet, comme ceci est indiqué aux figures 6A et 6B et 8. Le support peut être sous forme de modules individuels 32 (figure 6A) ou d'une bande continue 33 (figure 6B).

L'alimentation en liquide peut être assurée au moyen d'un réseau d'irrigation fertilisante au goutte à goutte (de type capillaire de préférence). Le réseau peut être externe et comprendre des conduits de distribution longeant les supports. Sur ces conduits sont montés des tubes capillaires alimentant chacun des plants. Il est également possible de prévoir un système intégré où les conduits de distribution de liquide sont incorporés dans les supports qui forment alors des bandes continues.

Plus précisément, dans le cas de la figure 8, les supports munis de film de paillage sont posés de part et d'autre d'un canal de drainage recouvert desdits films qui se superposent en partie. Les mottes sont ensuite arrosées, afin de permettre l'expansion du gel, ce qui conduit à la formation de la réserve d'eau désirée.

Bien entendu, l'invention n'est pas limitative et l'homme de métier pourra y apporter des modifications sans sortir pour cela de son domaine.

## Revendications

1. Support de culture (1, 17) utilisable dans le domaine de la culture hors-sol, constitué d'une enveloppe (2) en matériau étanche caractérisé en ce qu'à l'intérieur de l'enveloppe (2) a été répartie et fixée de façon régulière une couche de particules superabsorbantes (8), espacées les unes des autres, susceptibles d'absorber plusieurs dizaines de fois leur poids en liquide aqueux et, quand elles sont humidifiées, de gonfler pour occuper un volume environ 60 à 100 fois supérieur à leur volume initial.

2. Support de culture selon la revendication 1, caractérisé en ce que la couche de particules superabsorbantes (8) est supportée par une feuille de maintien (9) constituée d'un matériau qui permet la diffusion des liquides aqueux.

3. Support de culture selon la revendication 2, caractérisé en ce que la couche de particules superabsorbantes (8) est recouverte par une seconde feuille de maintien (9).

4. Support de culture selon l'une des revendications 2 ou 3, caractérisé en que les feuilles de maintien sont des mousses ou des structures fibreuses naturelles ou synthétiques.

5. Support de culture selon la revendication 4, caractérisé en ce que les feuilles de maintien sont des feuilles de ouate de cellulose.

6. Support de culture selon l'une des revendications 1 à 5, caractérisé en ce que les particules superabsorbantes sont fixées à la ou aux feuilles de maintien par une liaison obtenue par humidification desdites particules.

7. Support de culture selon la revendication 1, caractérisé en ce que les particules superabsorbantes sont réparties sur la feuille inférieure (18) de l'enveloppe étanche, sont fixées au moyen d'un adhésif et sont recouvertes d'une feuille (22) permettant la diffusion de liquides aqueux.

8. Support de culture selon l'une des revendications précédentes, caractérisé en ce que les particules se présentent sous forme de granulés de diamètre compris entre 0,5 et 4 mm ou de fibres de 0,01 à 0,2 mm de diamètre et 5 à 20 mm de longeur.

9. Support de culture selon l'une des revendications 1 à 8, caractérisé en ce que les particules superabsorbantes sont à base de polyacrylamide dont une partie, éventuellement, est sous forme cationique.

10. Support de culture selon l'une des revendications 1 à 9, caractérisé en ce que les particules superabsorbantes sont réparties à raison de 100 g à 800 g/m².

11. Support de culture selon l'une des revendications 1 à 10, caractérisé en ce que des particules ou fibres destinées à améliorer la capillarité sont présentes en mélange avec la couche de particules superabsorbantes.

12. Procédé pour réaliser un complexe formé de particules superabsorbantes et de deux feuilles à base de fibres naturelles ou synthétiques notamment ouate de cellulose, destiné à être incorporé dans une enveloppe en matériau étanche pour forme un support de culture hors-sol, dans lequel on procède à une humidification partielle des particules de superabsorbant pour leur donner un pouvoir adhésif, caractérisé par le fait qu'il consiste à déposer et à répartir de façon régulière des particules de superabsorbant consituées de granules de diamètre compris entre 0,5 et 4 mm et/ou de fibres de 0,01 à 0,2 mm de diamètre et 5 à 20 mm de longueur sur l'une desdites feuilles, formant ainsi une couche de particules de superabsorbant espacées les unes des antres, à les humidifier par pulvérisation puis à placer l'autre desdites feuilles sur ladite couche et à exercer une force de compression entre lesdites feuilles.

13. Procédé selon la revendication 12, caractérisé en ce que l'humidification est réalisée par pulvérisation d'eau en une quantité comprise entre 15 et 60% du produit superabsorbant sec.

**Claims**

1. A cultivation medium (1, 17) which may be used in the field of Soil-less cultivation, comprising an envelope (2) of watertight material characterised in that within the envelope (2) a layer of superabsorbent particles (8) is distributed and fixed in a regular fashion, spaced apart from each other, capable of absorbing several tens of times their weight of aqueous liquid and, when wetted, of swelling to occupy a volume approximately 60 to 100 times greater than their initial volume.

2. A cultivation medium according to claim 1, characterised in that the layer of superabsorbent particles (8) is supported by a holding sheet (9) consisting of a material which allows aqueous liquids to diffuse.

3. A cultivation medium according to claim 2, characterised in that the layer of superabsorbent particles (8) is covered by a second holding sheet (9).

4. A cultivation medium according to one of claims 2 or 3, characterised in that the holding sheets are foams, or natural or synthetic fibrous structures.

5. A cultivation medium according to claim 4, characterised in that the holding sheets are sheets of cellulose wadding.

6. A cultivation medium according to one of claims 1 to 5, characterised in that the superabsorbant particles are fixed to the holding sheet or sheets by a bond obtained by moistening the said particles.

7. A cultivation medium according to olaim 1, characterised in that the superabsorbant particles are distributed on the lower film (18) of the watertight envelope, are fixed by means of an adhesive and are covered by a sheet (22) which allows aqueous liquids to diffuse.

8. A cultivation medium according to one of the foregoing claims, characterised in that the particles take the form of granules of diameter between 0.5 and 4 mm or fibres 0.01 to 0.2 mm in diameter and 5 to 20 mm in length.

9. A cultivation medium according to one of claims 1 to 8, characterised in that the superabsorbent particles are based on polyacrylamide, of which a part may be in cationic form.

10. A cultivation medium according to one of claims 1 to 9, characterised in that the superabsorbent particles are distributed in a concentration of 100 to 800 g/m².

11. A cultivation medium according to one of claims 1 to 10, characterised in that particles or fibres intended to improve capillarity are present in a mixture with the layer of superabsorbent particles.

12. A process for manufacturing a complex formed of superabsorbent particles and two sheets based on natural or synthetic fibres, in particular cellulose wadding, intended to be incorporated within an envelope of watertight material to form a soil-less cultivation medium, in which the particles of superabsorbent are partially moistened in order to give them adhesive properties, characterised in that it consists of depositing and regularly distributing superabsorbent particles consisting of granules of diameter between 0.5 and 4 mm and/or fibres 0.01 to 0.2 mm in diameter and 5 to 20 mm in length on one of the said sheets, thus forming a layer of superabsorbent particles spaced apart from each other, moistening them by spraying and then placing the other of the said sheets on the said layer and exerting a compression force between the said sheets.

13. A process according to claim 12, characterised in that moistening is achieved by spraying water in a quantity between 15 and 60% of the dry superabsorbent product.

## Patentansprüche

1. Kulturträger (1, 17), der im Bereich des Anbaues ausserhalb des Bodens verwendbar ist, bestehend aus einer Hülle (2) aus dichtendem Material, dadurch gekennzeichnet, daß innerhalb der Hülle (2) eine Schicht superabsorbierender Teilchen (8) auf regelmäßige Weise verteilt und befestigt worden ist, wovon die einen mit Zwischenraum von den anderen angeordnet sind, die fähig sind, mehrere zehn Mal ihr Gewicht an wäßriger Flüssigkeit zu absorbieren und sich, wenn sie befeuchtet sind, aufzublähen, um ein Volumen von ungefähr dem 60- bis 100-fachen über ihrem Anfangsvolumen einzunehmen.

2. Kulturträger gemäß Anspruch 1, dadurch gekennzeichnet, daß die Schicht superabsorbierender Teilchen (8) von einer Haltefolie (9) getragen ist, die aus einem Material besteht, welches die Diffusion wäßriger Flüssigkeiten erlaubt.

3. Kulturträger gemäß Anspruch 2, dadurch gekennzeichnet, daß die Schicht superabsorbierender Teilchen (8) von einer zweiten Haltefolie (9) bedeckt ist.

4. Kulturträger gemäß einem der Ansprüche 2 oder 3, dadurch gekennzeichnet, daß die Haltefolien Schäume oder natürliche oder synthetische Faserstrukturen sind.

5. Kulturträger gemäß Anspruch 4, dadurch gekennzeichnet, daß die Haltefolien Folien aus Zellstoffwatte sind.

6. Kulturträger gemäß einem der Ansprüche 1 bis 5, dadurch gekennzeichnet, daß die superabsorbierenden Teilchen an dem oder den Haltefolien durch eine Verbindung befestigt sind, die durch Befeuchtung der Teilchen erhalten ist.

7. Kulturträger gemäß Anspruch 1, dadurch gekennzeichnet, daß die superabsorbierenden Teilchen auf der unteren Folie (18) der dichten Hülle verteilt sind, mittels eines Klebstoffes befestigt und von einer Folie (22) bedeckt sind, welche die Diffusion wäßriger Flüssigkeiten erlaubt.

8. Kulturträger gemäß einem der vorhergehenden Ansprüche, dadurch gekennzeichnet, daß sich die Teilchen in Gestalt von Körnchen mit einem Durchmesser zeigen, der zwischen 0,5 und 4 mm enthalten ist oder von Fasern mit einem Durchmesser von 0,01 bis 0,2 mm und 5 bis 20 mm Länge.

9. Kulturträger gemäß einem der Ansprüche 1 bis 8, dadurch gekennzeichnet, daß die superabsorbierenden Teilchen auf der Grundlage von Polyacrylamid sind, wovon ein Teil gegebenenfalls von kationischer Form ist.

10. Kulturträger gemäß einem der Ansprüche 1 bis 9, dadurch gekennzeichnet, daß die superabsorbierenden Teilchen in einer Menge von 100 g bis 800 g/m$^2$ verteilt sind.

11. Kulturträger gemäß einem der Ansprüche 1 bis 10, dadurch gekennzeichnet, daß zum Verbessern der Kapillarität bestimmte Teilchen oder Fasern in einer Mischung mit der Schicht superabsorbierender Teilchen vorliegen.

12. Verfahren zum Verwirklichen einer komplexen Form aus superabsorbierenden Teilchen und aus zwei Folien auf der Grundlage von natürlichen oder synthetischen Fasern, insbesondere Zellstoffwatte, die dazu bestimmt ist, in eine Hülle aus dichtem Material eingebaut zu werden, um einen Kulturträger außerhalb des Bodens zu bilden, indem man eine teilweise Befeuchtung der Teilchen des Superabsorptionsmittels vornimmt, um diesen eine Klebekraft zu geben, dadurch gekennzeichnet, daß es darin besteht, Teilchen von Superabsorptionsmittel bestehend aus Körnchen mit einem zwischen 0,5 und 4 mm enthaltenden Durchmesser oder aus Fasern mit einem Durchmesser von 0,01 bis 0,2 mm oder 5 bis 20 mm Länge auf einer der Folien abzulagern und gleichmäßig zu verteilen, um so eine Schicht von Teilchen des Superabsorptionsmittels zu bilden, wovon die einen von den anderen mit Zwischenraum angeordnet sind, sie durch Versprühen zu befeuchten, dann die andere der Folien auf die Schicht zu legen und eine Druckkraft zwischen den Folien auszuüben.

13. Verfahren gemäß Anspruch 12, dadurch gekennzeichnet, daß die Befeuchtung durch Versprühen von Wasser in einer Menge verwirklicht wird, die zwischen 15 und 60 % des trockenen Erzeugnisses des Superabsorptionsmittels enthalten ist.

EP 0 230 799 B1

Fig.1a

Fig.1b

Fig.2

Fig.3

Fig.4

Fig-5

Fig-6a

Fig-6b

Fig-7

Fig-8

Fig-2a